# EUROPEAN PATENT APPLICATION

(11) **EP 4 553 982 A1**
(43) Date of publication of application: **14.05.2025**
(21) Application number: 24194834.8
(22) Date of filing: 16.08.2024
(51) Int. Cl.: H01M 50/42, H01M 50/443, H01M 50/446, H01M 50/451, H01M 50/489, H01M 10/0525

(54) **BINDER, SEPARATOR AND RECHARGEABLE LITHIUM BATTERY INCLUDING THE SEPARATOR**

(30) Priority: 09.11.2023 KR 20230154658
(71) Applicant: SAMSUNG SDI CO., LTD., Giheung-gu Yongin-si, Gyeonggi-do 17084 (KR)
(72) Inventor: Seo, Dongwan, 17084 Yongin-si, Gyeonggi-do (KR); Choi, Yeonjoo, 17084 Yongin-si, Gyeonggi-do (KR); Kim, Gain, 17084 Yongin-si, Gyeonggi-do (KR); Gu, Jayeon, 17084 Yongin-si, Gyeonggi-do (KR); Lee, Woosung, 17084 Yongin-si, Gyeonggi-do (KR)
(74) Representative: Gulde & Partner

(57) **Abstract**

A binder for usage in a rechargeable lithium battery is provided. The binder is a copolymer including: a first structural unit represented by any one of Chemical Formulas 1 to 3; a second structural unit represented by Chemical Formula 4; and a third structural unit represented by any one of Chemical Formulas 5 to 7. Further, a separator is provided comprising a porous substrate; and a coating layer on at least one surface of the porous substrate and including the binder and inorganic particles. In addition, a rechargeable lithium battery is provided including the separator.

## Description

### BACKGROUND OF THE INVENTION

### (a) Field of the Invention

Binders, separators including the binders, and rechargeable lithium batteries including the separators are disclosed.

### (b) Description of the Related Art

With the rapid spread of electronic devices that use batteries, such as, e.g., mobile phones, laptop computers, and electric vehicles, the demand for rechargeable batteries with high energy density and high capacity is rapidly increasing. Accordingly, there currently is corresponding research and development to improve the performance of rechargeable lithium batteries.

A rechargeable lithium battery typically includes a positive electrode and a negative electrode including an active material capable of intercalating and deintercalating lithium ions, and an electrolyte solution. Electrical energy is typically produced through oxidation and reduction reactions when lithium ions are intercalated/deintercalated from the positive electrode and negative electrode.

The separator is an intermediate membrane that substantially isolates the positive and negative electrodes in a rechargeable lithium battery and substantially continuously maintains ionic conductivity, enabling charging and discharging of the rechargeable lithium battery. When a rechargeable lithium battery is exposed to a high-temperature environment due to abnormal behavior, a separator may be mechanically shrunk or damaged due to melting characteristics at a low temperature. Herein, the positive and negative electrodes contact each other and may cause an explosion of the battery. In order to overcome this challenge, it may be advantageous to provide technology of reducing or suppressing shrinkage of a separator and ensuring or improving stability of a rechargeable lithium battery.

For example, a method of increasing heat resistance of the separator by coating the separator with a mixture of inorganic particles having a large thermal resistance and an organic binder having adherence is typically known. However, such method may not sufficiently secure the desired adhesive strength, and lowering the resistance is challenging.

### SUMMARY OF THE INVENTION

Some example embodiments include a binder for a rechargeable lithium battery having high heat resistance and low electrical resistance.

Some example embodiments include a separator for a rechargeable lithium battery including the binder.

Some example embodiments include a rechargeable lithium battery including the separator.

Some example embodiments include a binder for a rechargeable lithium battery including at least one of a first structural unit derived from (meth)acrylic acid, (meth)acrylate, or a salt thereof; a second structural unit derived from hydroxyalkyl (meth)acrylate; and a third structural unit derived from (meth)acrylamidosulfonic acid or a salt thereof.

Some example embodiments include a separator for a rechargeable lithium battery including a porous substrate, and a coating layer on at least one surface of the porous substrate and including a binder and inorganic particles, wherein the binder includes at least one of a first structural unit derived from a (meth)acrylic acid, (meth)acrylate, or a salt thereof; a second structural unit derived from hydroxyalkyl (meth)acrylate; and a third structural unit derived from (meth)acrylamidosulfonic acid or a salt thereof.

Some example embodiments include a rechargeable lithium battery including a positive electrode, a negative electrode, and a separator between the positive electrode and the negative electrode.

The binder for a rechargeable lithium battery according to some example embodiments exhibits high heat resistance and low electrical resistance. Accordingly, by applying the binder for a rechargeable lithium battery according to some example embodiments to the coating layer of the separator, a rechargeable lithium battery with desired, advantageous or improved cycle-life characteristics at room temperature and/or high temperature can be implemented.

### BRIEF DESCRIPTION OF THE DRAWINGS

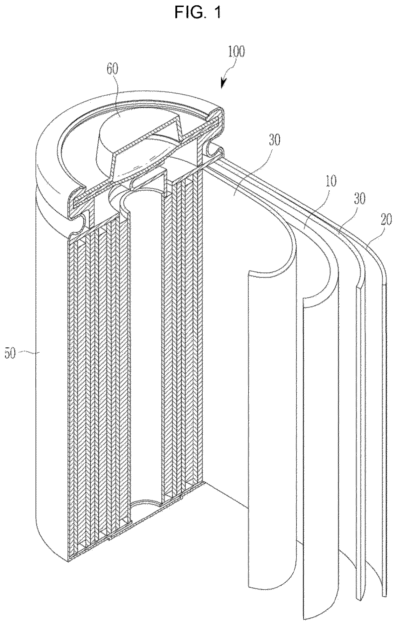

FIGS. 1 to 4 are exploded perspective views of rechargeable lithium batteries according to some example embodiments.

### DETAILED DESCRIPTION OF THE EMBODIMENTS

Hereinafter, example embodiments of the present invention will be described in detail. However, these embodiments are examples, the present invention is not limited thereto and the present invention is defined by the scope of claims.

As used herein, when specific definition is not otherwise provided, it will be understood that when an element such as a layer, film, region, or substrate is referred to as being "on" another element, it can be directly on the other element or intervening elements may also be present.

As used herein, when a definition is not otherwise provided, a particle size is an average particle size. This average particle size means an average particle size (D50), which is a diameter of particles with a cumulative volume of 50 volume% in the particle size distribution. The average particle size (D50) can be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the average particle size (D50) value may be easily obtained through a calculation. A laser diffraction method may also be used. When measuring by laser diffraction, more specifically, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle size (D50) based on 50% of the particle size distribution in the measuring device can be calculated.

As used herein, when specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C7 to C20 arylalkyl group, "alkylene group" refers to a C1 to C20 alkylene group, "arylene group" refers to a C6 to C20 arylene group, "alkylarylene group" refers to a C7 to C20 alkylarylene group, "heteroarylene group" refers to a C3 to C20 heteroarylene group, and "alkoxylene group" means a C1 to C20 alkoxylene group.

As used herein, when specific definition is not otherwise provided, "substituted" refers to replacement of at least one hydrogen atom by a substituent selected from the group consisting of a halogen atom (F, Cl, Br, or I), a hydroxy group, a C1 to C20 alkoxy group, a nitro group, a cyano group, an amino group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

Also, when a specific definition is not otherwise provided, "hetero" means that at least one hetero atom of N, O, S, and P is included in the chemical formula.

Also, when a specific definition is not otherwise provided, "(meth)acrylate" refers to both "acrylate" and "methacrylate," "(meth)acrylic acid" refers to both "acrylic acid" and "methacrylic acid," and "(meth)acrylamidosulfonic acid" refers to both "acrylamidosulfonic acid" and "methacrylamidosulfonic acid."

In chemical formulas of the present specification, unless a specific definition is otherwise provided, hydrogen is bonded at the position when a chemical bond is not drawn where supposed to be given.

As used herein, a weight average molecular weight (Mw) is a value measured using gel permeation chromatography (GPC).

### Binder

Some example embodiments provide a binder for a rechargeable lithium battery including a first structural unit derived from (meth)acrylic acid, (meth)acrylate, or a salt thereof; a second structural unit derived from hydroxyalkyl (meth)acrylate; and a third structural unit derived from (meth)acrylamidosulfonic acid or a salt thereof.

The binder for a rechargeable lithium battery according to some example embodiments exhibits high heat resistance and low electrical resistance. Accordingly, by applying the binder for a rechargeable lithium battery according to some example embodiments to the coating layer of the separator, a rechargeable lithium battery with desired, advantageous or improved cycle-life characteristics at room temperature and/or high temperature can be implemented.

A description of the binder for a rechargeable lithium battery according to some example embodiments is as follows.

Based on 100 mol% of the binder for a rechargeable lithium battery according to some example embodiments, the first structural unit may be included in an amount of 20 mol% to 75 mol%, or 25 mol% to 70 mol%, or 30 mol% to 65 mol% (i.e., for example, 20 % to 75 % of the structural unit of the copolymer may be first structural units).

The first structural unit may be derived from (meth)acrylic acid, (meth)acrylate, or a salt thereof, and is configured to fix the inorganic particles on the porous substrate, and also provides adhesion so that the coating layer sufficiently adheres to the porous substrate and electrode, and can contribute to improving the heat resistance and air permeability of the separator. Additionally, the first structural unit may contribute to improving the dispersibility of the coating slurry by including a carboxyl functional group (-C(=O)O-) in the structural unit.

The first structural unit is represented by any one of Chemical Formulas 1 to 3:

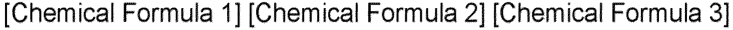

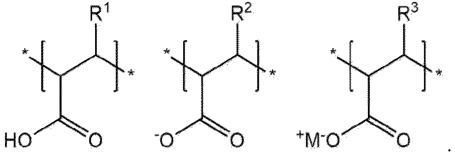

R¹ to R³ each independently represents hydrogen or a C1 to C10 alkyl group, for example a C1 to C3 alkyl group, such as a methyl group.

Based on 100 mol% of the binder for a rechargeable lithium battery according to one example embodiment, the second structural unit may be included in an amount of 1 mol% to 20 mol%, 2 mol% to 5 mol%, or 5 mol% to 15 mol%.

The second structural unit may be derived from a hydroxyalkyl (meth)acrylate, and is configured to fix the inorganic particles on the porous substrate, while providing adhesion so that the coating layer sufficiently adheres to the porous substrate and electrode. Additionally, the second structural unit may contribute to improving the dispersibility of the coating slurry by including a hydroxy functional group (-OH) in the structural unit.

The second structural unit is represented by Chemical Formula 4:

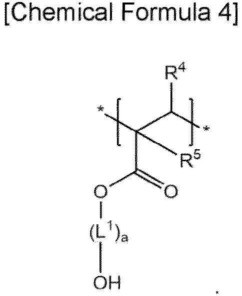

R⁴ and R⁵ each independently represents hydrogen or a C1 to C10 alkyl group, for example a C1 to C3 alkyl group, such as a methyl group. According to one embodiment, R⁴ may be hydrogen or a methyl group and R⁵ may be a methyl group.

In addition or independently from the aforementioned specific definitions of R⁴ and/or R⁵, index a may be 1 and L¹ may be a C1 to C10 alkylene group, for example a C1 to C3 alkylene group, such as an ethylene group.

The third structural unit may be included in an amount of 20% to 75 mol%, 25% to 70 mol%, or 30% to 65 mol%.

The total amount of the first structural unit, the second structural unit, and the third structural unit add up to 100 mol%.

The third structural unit includes a bulky functional group, for example, derived from (meth)acrylamidosulfonic acid or a salt thereof, thereby increasing the glass transition temperature thereof and thus enhancing the heat resistance of the separator. Additionally, when the third structural unit includes a functional group derived from a salt of (meth)acrylamidosulfonic acid, the metal (M) can move through the third structural unit due to the sulfonic acid functional group substituted with the metal (M), which can have the effect of lowering the resistance.

The third structural unit is represented by any one of Chemical Formulas 5 to 7:

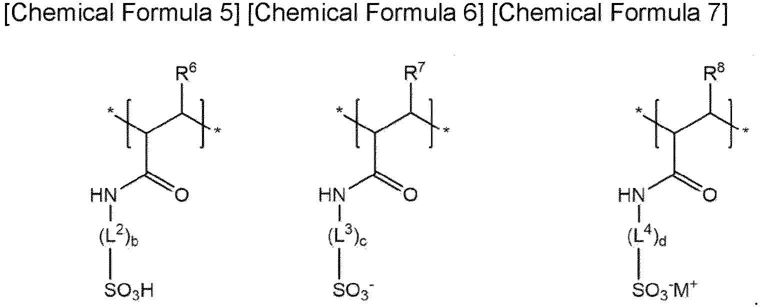

Descriptions of Chemical Formulas 1 to 7 are as follows.

R⁶ to R⁸ each independently represents hydrogen or a C1 to C10 alkyl group, for example a C1 to C3 alkyl group, such as a methyl group. According to one embodiment, R⁶ to R⁸ may be hydrogen or a methyl group.

In addition or independently from the aforementioned specific definitions of R⁶ to R⁸, indices b to d may be 1 and L¹ to L³ may be a C1 to C10 alkylene group, for example a C1 to C3 alkylene group, such as an ethylene group. For example, L¹ to L³ may be *-C(CH₃)₂-CH₂-*.

R¹ to R⁸ are each independently be hydrogen or a C1 to C10 alkyl group. For example, R¹ to R⁴ and R⁶ to R⁸ may each be hydrogen or a methyl group; and R⁵ may be a methyl group.

L¹ to L⁴ are each independently be a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, L¹ may be a methylene group or an ethylene group; and L² to L⁴ may each independently be *-C(CH₃)₂-CH₂-*.

a, b, c, and d are each independently be one of the integers in a range of 0 to 2. For example, a, b, c, and d may all be equal to 1.

M is an alkali metal, and the alkali metal may be at least one of lithium, sodium, potassium, rubidium, or cesium. For example, M may be lithium or sodium.

According to one embodiment, the first structural unit is derived from acrylic acid, the second structural unit is derived from hydroxyethylmethacrylate, and the third structural unit is derived from 2-acrylamido-2-methylpropanesulfonic acid.

Representative examples of binders for rechargeable lithium batteries according to some example embodiments are as follows:

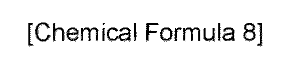

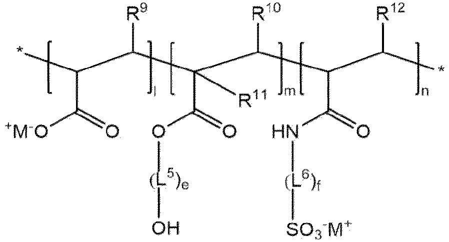

The description of Chemical Formula 8 is as follows.

R⁹ to R¹² are independently be hydrogen or a C1 to C10 alkyl group. For example, R⁹, R¹⁰, and R¹² may each be hydrogen or a methyl group; and R¹¹ may be a methyl group.

L⁵ and L⁶ are each independently be a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, L⁵ may be a methylene group or an ethylene group; and L⁶ may be *-C(CH₃)₂-CH₂-*.

M is an alkali metal, and the alkali metal may be at least one of lithium, sodium, potassium, rubidium, or cesium. For example, M may be lithium or sodium.

l, m, and n are the molar ratio of each unit, and l+m+n =1. For example, 0.2≤l≤0.75, 0.01≤m≤0.2, and 0.2≤n≤0.75; or 0.25≤l≤0.7, 0.02≤m≤0.15, and 0.25≤n≤0.7; or 0.3≤l≤0.65, 0.05≤m≤0.15, and 0.3≤n≤0.65.

The binder may have a weight average molecular weight measured using gel permeation chromatography (GPC) of 100,000 g/mol to 1,000,000 g/mol, 200,000 g/mol to 950,000 g/mol, or 300,000 g/mol to 900,000 g/mol.

When the above range is satisfied, a separator including the binder for a rechargeable lithium battery according to some example embodiments can exhibit desired, advantageous or improved adhesion and low electrical resistance.

### Separator

A separator for a rechargeable lithium battery includes a porous substrate; and a coating layer disposed on at least one surface of the porous substrate and including the afore-mentioned binder and inorganic particles.

The binder for a rechargeable lithium battery according to the aforementioned example embodiments exhibits high heat resistance and low electrical resistance. Accordingly, by applying the binder for a rechargeable lithium battery according to the aforementioned embodiments to the coating layer of the separator, a rechargeable lithium battery with desired, advantageous or improved cycle-life characteristics at room temperature and/or high temperature can be implemented.

Hereinafter, excluding descriptions that overlap with the above, a description of the separator for a rechargeable lithium battery according to some example embodiments is as follows.

### Inorganic Particles

The inorganic particles can hinder or prevent the separator from rapidly shrinking or deforming due to temperature increase. The inorganic particles may be ceramic materials capable of improving heat resistance, for example, the inorganic particles may be at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The inorganic particles may be at least one of spherical, plate-shaped, cubic, or irregular shaped.

An average particle size of the inorganic particles may be 0.2 µm to 1 µm, 0.25 µm to 0.7µm, or 0.25 µm to 0.5 µm.

The average particle size of the inorganic particles is the particle size (D₅₀) at 50% by volume in the cumulative size-distribution curve. The average particle diameter (D50) of the inorganic particles may be measured by laser diffraction (LD). The method may be performed according to ISO 13320:2020. By using inorganic particles having an average particle size in the above range, appropriate strength can be provided to the coating layer, thereby improving the heat resistance, durability, and stability of the separator.

Meanwhile, a weight ratio of binder: inorganic particles in the coating layer may be in a range of 1:5 to 1:40, desirably in a range of 1:10 to 1:35, and more desirably in a range of 1:15 to 1:30. When included within the above range, the separator can exhibit desired, advantageous or improved heat resistance and low electrical resistance.

### Coating Layer

The coating layer may have a thickness of 0.2 µm to 5 µm, for example, 0.5 µm to 3 µm.

Within the above range, high heat resistance and low electrical resistance can be simultaneously or contemporaneously achieved, thereby improving battery safety and reliability.

The coating layer may be disposed on one or both surfaces of the porous substrate. In the latter case, it may be advantageous to achieve high heat resistance and low electrical resistance of the separator.

### Porous Substrate

The porous substrate may have a plurality of pores and may generally be or include a substrate used in an electrochemical device. Non-limiting examples of the porous substrate may be or include a polymer film formed of a copolymer or a mixture of two or more of polyolefin such as polyethylene and polypropylene, polyester such as polyethylene terephthalate and polybutylene terephthalate, polyacetal, polyamide, polyimides, polycarbonate, polyether ether ketone, polyaryl ether ketone, polyetherimide, polyamideimide, polybenzimidazole, polypolyethersulfone, polyphenylene oxide, a cyclic olefin copolymer, polyphenylene sulfide, polyethylene naphthalate, a glass fiber, Teflon, and polytetrafluoroethylene.

The porous substrate may be or include a polyolefin-based substrate including polyolefin, and the polyolefin-based substrate may have a desired, advantageous or improved shutdown function, which can contribute to improving the safety of the battery. The polyolefin-based substrate may be one of, for example, a polyethylene single film, a polypropylene single film, a polyethylene/polypropylene double film, a polypropylene/polyethylene/polypropylene triple film, and a polyethylene/polypropylene/polyethylene triple film. Additionally, the polyolefin-based resin may include a non-olefin resin in addition to an olefin resin, or may include a copolymer of olefin and non-olefin monomer.

The porous substrate may have a thickness of in a range of 1 µm to 40 µm, for example 1 µm to 30 µm, 1 µm to 20 µm, 2 µm to 15 µm, or 5 µm to 10 µm.

### Method of Manufacturing Separator

The separator of some example embodiments may be manufactured by various known methods. For example, a separator for a rechargeable lithium battery can be formed by coating a composition for forming a coating layer to one or both surfaces of a porous substrate and then drying it.

### Rechargeable Lithium Battery

Some example embodiments include a rechargeable lithium battery including a positive electrode, a negative electrode, and a separator between the positive electrode and the negative electrode.

### Positive Electrode Active Material

The positive electrode active material may be or include a compound (lithiated intercalation compound) capable of intercalating and deintercalating lithium. For example, one or more types of composite oxides of lithium and a metal that is one of cobalt, manganese, nickel, and a combination thereof may be used.

The composite oxide may be a lithium transition metal composite oxide, and examples may include, e,g., at least one of lithium nickel-based oxide, lithium cobalt-based oxide, lithium manganese-based oxide, a lithium iron phosphate-based compound, cobalt-free lithium nickel-manganese-based oxide, and a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn₁-_{g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be or include, for example, lithium nickel-based oxide represented by Chemical Formula 11, lithium cobalt-based oxide represented by Chemical Formula 12, lithium iron phosphate-based compound represented by Chemical Formula 13, and cobalt-free lithium nickel-manganese-based oxide represented by Chemical Formula 14, or a combination thereof.

[Chemical Formula 11] Liₐ₁Niₓ₁M¹_{y1}M²_{z1}O_{2-b1}X_{b1}

In Chemical Formula 11, 0.9 ≤ a1 ≤ 1.8, 0.3 ≤ x1 ≤ 1, 0 ≤ y1 ≤ 0.7, 0 ≤ z1 ≤ 0.7, 0.9 ≤ x1+y1+z1 ≤ 1.1, and 0 ≤ b1 ≤ 0.1, M¹ and M² are each independently one or more of Al, B, Ba, Ca, Ce, Co, Cr, Cu, Fe, Mg, Mn, Mo, Nb, Si, Sn, Sr, Ti, V, W, and Zr, and X is one or more of F, P, and S.

In Chemical Formula 11, 0.6 ≤ x1 ≤ 1, 0≤y1≤ 0.4, and 0≤z1≤ 0.4, or 0.8 ≤ x1 ≤ 1, 0 ≤ y1 ≤ 0.2, and 0 ≤ z1 ≤ 0.2.

[Chemical Formula 12] Liₐ₂COₓ₂M³_{y2}O_{2-b2}X_{b2}

In Chemical Formula 12, 0.9 ≤ a2 ≤ 1.8, 0.7 ≤ x2 ≤ 1, 0 ≤ y2 ≤ 0.3, 0.9 ≤ x2+y2 ≤ 1.1, and 0 ≤ b2 ≤ 0.1, M³ is one or more of Al, B, Ba, Ca, Ce, Cr, Cu, Fe, Mg, Mn, Mo, Ni, Se, Si, Sn, Sr, Ti, V, W, Y, Zn, and Zr, and X is one or more of F, P, and S.

[Chemical Formula 13] Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0 ≤ b3 ≤ 0.1, M⁴ is one or more of Al, B, Ba, Ca, Ce, Co, Cr, Cu, Mg, Mn, Mo, Ni, Se, Si, Sn, Sr, Ti, V, W, Y, Zn, and Zr, and X is one or more of F, P, and S.

[Chemical Formula 14] Liₐ₄Niₓ₄Mn_{y4}M⁵_{z4}O_{2-b4}X_{b4}

In Chemical Formula 14, 0.9 ≤ a2 ≤ 1.8, 0.8 ≤ x4<1, 0<y4 ≤ 0.2, 0 ≤ z4 ≤ 0.2, 0.9 ≤ x4+y4+z4 ≤ 1.1, and 0 ≤ b4 ≤ 0.1, M⁵ is one or more of Al, B, Ba, Ca, Ce, Cr, Fe, Mg, Mo, Nb, Si, Sn, Sr, Ti, V, W, and Zr, and X is one or more of F, P, and S.

As an example, the positive electrode active material may be or include a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of metals excluding lithium in the lithium transition metal composite oxide. The high nickel-based positive electrode active materials can achieve high capacity and can be applied to high-capacity, high-density rechargeable lithium batteries.

### Positive Electrode

The positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive configured to operate as a sacrificial positive electrode.

A content of the positive electrode active material may be 90 wt% to 99.5 wt%, and a content of the binder and the conductive material may be 0.5 wt% to 5 wt%, respectively based on 100 wt% of the positive electrode active material layer.

The binder is configured to sufficiently attach the positive electrode active material particles to each other and also to sufficiently attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as, e.g., natural graphite, artificial graphite, carbon black, acetylene black, ketjen black, a carbon fiber, a carbon nanofiber, and carbon nanotube; a metal-based material including, e.g., copper, nickel, aluminum, silver, etc., in a form of a metal powder or a metal fiber; a conductive polymer such as, e.g., a polyphenylene derivative; or a mixture thereof.

The current collector may be or include Al, but is not limited thereto.

### Negative Electrode Active Material

The negative electrode active material may be or include at least one of a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be or include graphite such as irregular, sheet-shaped, flake-shaped, sphere-shaped, or fiber-shaped natural graphite or artificial graphite. The amorphous carbon may be or include a soft carbon, a hard carbon, a mesophase pitch carbonization product, calcined coke, and the like.

The lithium metal alloy may include lithium and a metal such as, e.g., at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include silicon, a silicon-carbon composite, SiOₓ (0 < x < 2), a Si-Q alloy (wherein Q is one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include, e.g., Sn, SnO₂, a Sn-based alloy, or a combination thereof.

The silicon-carbon composite may be or include a composite of silicon and amorphous carbon. According to some example embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0.5 wt% to 5 wt% of the conductive material.

The binder may be configured to sufficiently attach the negative electrode active material particles to each other and also to sufficiently attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, the aqueous binder may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be or include Na, K, or Li.

The dry binder may be or include a polymer material configured to be fiberized, and may be or include, for example, polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change. Examples of the conductive material may be, e.g., at least one of a carbon-based material such as natural graphite, artificial graphite, carbon black, acetylene black, ketjen black, a carbon fiber, a carbon nanofiber, a carbon nanotube, and the like; a metal-based material such as copper, nickel, aluminum silver, and the like in a form of a metal powder or a metal fiber; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof, but is not limited thereto.

### Electrolyte Solution

The electrolyte solution for a rechargeable lithium battery includes a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethylpropionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. The ketone-based solvent may include, e.g., cyclohexanone. The alcohol-based solvent may include at least one of ethyl alcohol, isopropyl alcohol, and the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or in combination of two or more.

Additionally, when using a carbonate-based solvent, cyclic carbonate and chain carbonate can be mixed and used, and cyclic carbonate and chain carbonate can be mixed at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

### Rechargeable Lithium Battery

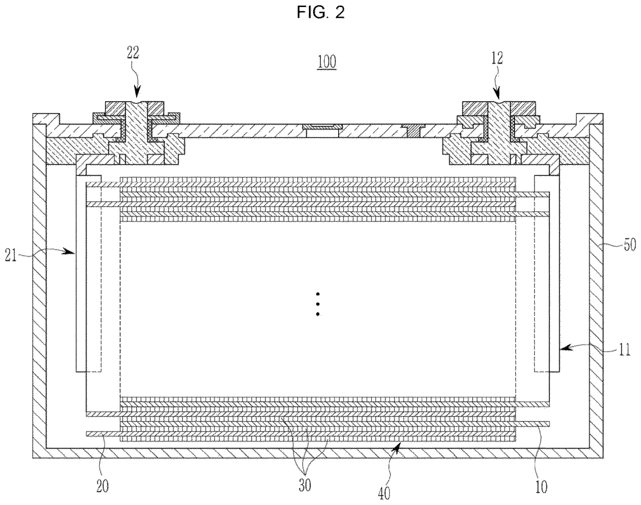

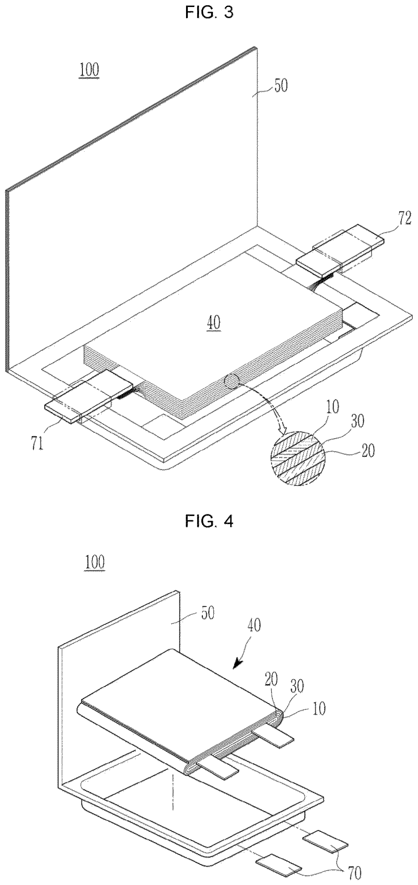

The rechargeable lithium battery may be classified into, e.g., cylindrical, prismatic, pouch, or coin-type batteries, and the like depending on their shape. FIGS. 1 to 4 are schematic views illustrating a rechargeable lithium battery according to an example embodiment. FIG. 1 shows a cylindrical battery, FIG. 2 shows a prismatic battery, and FIGS. 3 and 4 show pouch-type batteries. Referring to FIGS. 2 to 4, the rechargeable lithium battery 100 includes an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50 as shown in FIG. 1. In addition, in FIG. 2, the rechargeable lithium battery 100 may include a positive lead tab 11, a positive terminal 12, a negative lead tab 21, and a negative terminal 22. As shown in FIG. 3, the rechargeable lithium battery 100 includes a positive electrode tab 71 and a negative electrode tab 72 serving as an electrical path for inducing the current formed in the electrode assembly 40 to the outside. As shown in FIG. 4, the rechargeable lithium battery 100 includes an electrode tab 70, which includes the positive electrode tab 71 and a negative electrode tab 72 illustrated in FIG. 3 and serving as an electrical path for inducing the current formed in the electrode assembly 40 to the outside.

The rechargeable lithium battery according to some example embodiments may be used in, or applied to, e.g., automobiles, mobile phones, and/or various types of electrical devices, but the present invention is not limited thereto.

Hereinafter, examples of the present invention and comparative examples are described. These examples, however, are not in any sense to be interpreted as limiting the scope of the invention.

### Synthesis Examples and Comparative Synthesis Examples: Preparation of Binder

### Synthesis Example 1: Poly(acrylic acid-co-hydroxyethylmethacrylate-co-2-acrylamido-2-methylpropanesulfonic acid) lithium salt (30:10:60)

After adding distilled water (1249.72 g), a 20% aqueous lithium hydroxide solution (203.69 g), acrylic acid (21.6 g, 0.3 mol), hydroxyethyl methacrylate (13 g, 0.1 mol), 2-acrylamido-2-methylpropanesulfonic acid (124.3 g, 0.6 mol), and ammonium persulfate (0.2 g, 0.001 mol) to a 3 L 4-necked separable flask equipped with a stirrer, a thermometer, and a cooling tube, an internal pressure of the flask was three times repeatedly reduced to 10 mmHg with a diaphragm pump and returned to a normal pressure with nitrogen.

The reaction solution was reacted by heating, while a reaction temperature thereof was controlled to be stable between about 65 °C to about 70 °C for 12 hours.

After cooling the reaction solution to room temperature, the reaction solution was taken about by 10 mL to measure a non-volatile component (NV), which was 9.8% (theoretical value: 10%). In addition, in the obtained poly(acrylic acid-co-hydroxyethylmethacrylate-co-2-acrylamido-2-methylpropanesulfonic acid) lithium salt, a first structural unit derived from acrylic acid, a second structural unit derived from hydroxyethylmethacrylate, and a third structural unit derived from 2-acrylamido-2-methylpropanesulfonic acid had a molar ratio of 30:10:60.

### Synthesis Example 2: Poly(acrylic acid-co-hydroxyethylmethacrylate-co-2-acrylamido-2-methylpropanesulfonic acid) lithium salt (40:10:50)

An acrylic copolymer was prepared in the same manner as in Synthesis Example 1 except that acrylic acid (28.8 g, 0.4 mol), hydroxyethylmethacrylate (13 g, 0.1 mol), and 2-acrylamido-2-methylpropanesulfonic acid (103.6 g, 0.5 mol) were used.

The reaction solution had a non-volatile component of 9.7% (theoretical value: 10%). In addition, in the obtained poly(acrylic acid-co-hydroxyethylmethacrylate-co-2-acrylamido-2-methylpropanesulfonic acid) lithium salt, a first structural unit derived from acrylic acid, a second structural unit derived from hydroxyethyl methacrylate, and a third structural unit derived from 2-acrylamido-2-methylpropanesulfonic acid had a molar ratio of 40:10:50.

### Synthesis Example 3: Poly(acrylic acid-co-hydroxyethylmethacrylate-co-2-acrylamido-2-methylpropanesulfonic acid) lithium salt (60:10:30)

An acrylic copolymer was prepared in the same manner as in Synthesis Example 1 except that acrylic acid (43.2 g, 0.6 mol), hydroxyethylmethacrylate (13 g, 0.1 mol), and 2-acrylamido-2-methylpropanesulfonic acid (62.2 g, 0.3 mol) were used.

The reaction solution had a non-volatile component of 9.7% (theoretical value: 10%). In addition, in the obtained poly(acrylic acid-co-hydroxyethylmethacrylate-co-2-acrylamido-2-methylpropanesulfonic acid) lithium salt, a first structural unit derived from acrylic acid, a second structural unit derived from hydroxyethyl methacrylate, and a third structural unit derived from 2-acrylamido-2-methylpropanesulfonic acid had a molar ratio of 60:10:30.

### Synthesis Example 4: Poly(acrylic acid-co-hydroxyethylmethacrylate-co-2-acrylamido-2-methylpropanesulfonic acid) lithium salt (40:5:55)

An acrylic copolymer was prepared in the same manner as in Synthesis Example 1 except that acrylic acid (28.8 g, 0.4 mol), hydroxyethylmethacrylate (6.5 g, 0.05 mol), and 2-acrylamido-2-methylpropanesulfonic acid (114 g, 0.55 mol) were used.

The reaction solution had a non-volatile component of 9.8% (theoretical value: 10%). In addition, in the obtained poly(acrylic acid-co-hydroxyethylmethacrylate-co-2-acrylamido-2-methylpropanesulfonic acid) lithium salt, a first structural unit derived from acrylic acid, a second structural unit derived from hydroxyethyl methacrylate, and a third structural unit derived from 2-acrylamido-2-methylpropanesulfonic acid had a molar ratio of 40:5:55.

### Synthesis Example 5: Poly(acrylic acid-co-hydroxyethylmethacrylate-co-2-acrylamido-2-methylpropanesulfonic acid) lithium salt (40:15:45)

An acrylic copolymer was prepared in the same manner as in Synthesis Example 1 with a difference that acrylic acid (28.8 g, 0.4 mol), hydroxyethylmethacrylate (19.5 g, 0.15 mol), and 2-acrylamido-2-methylpropanesulfonic acid (93.3 g, 0.45 mol) were used.

The reaction solution had a non-volatile component of 9.8% (theoretical value: 10%). In addition, in the obtained poly(acrylic acid-co-hydroxyethylmethacrylate-co-2-acrylamido-2-methylpropanesulfonic acid) lithium salt, a first structural unit derived from acrylic acid, a second structural unit derived from hydroxyethyl methacrylate, and a third structural unit derived from 2-acrylamido-2-methylpropanesulfonic acid had a molar ratio of 40:15:45.

### Comparative Synthesis Example 1: Poly(acrylic acid-co-2-acrylamido-2-methylpropanesulfonic acid) lithium salt (35:65)

An acrylic copolymer was prepared in the same manner as in Synthesis Example 1 with a difference that acrylic acid (25.2 g, 0.35 mol) and 2-acrylamido-2-methylpropanesulfonic acid (134.7 g, 0.65 mol) were used.

The reaction solution had a non-volatile component of 9.7% (theoretical value: 10%). In addition, in the obtained poly(acrylic acid-co-2-acrylamido-2-methylpropanesulfonic acid) lithium salt, a first structural unit derived from acrylic acid and a third structural unit derived from 2-acrylamido-2-methylpropanesulfonic acid had a molar ratio of 35:65.

### Comparative Synthesis Example 2: Poly(acrylic acid-co-acrylonitrile-co-2-acrylamido-2-methylpropanesulfonic acid) lithium salt (45:50:5)

Distilled water (968 g), a 20% aqueous lithium hydroxide solution (102 g), acrylic acid (54 g, 0.62 mol), ammonium persulfate (0.65 g, 2.85 mmol), and 2-methylpropanesulfonic acid (6 g, 0.02 mol) were added to a 3 L 4-necked separable flask equipped with a stirrer, a thermometer, and a cooling tube, and after three times repeatedly reducing an internal pressure of the flask to 10 mmHg with a diaphragm pump and returning the flask to a normal pressure with nitrogen, acrylonitrile (60 g, 0.94 mol) was added thereto.

The reaction solution was reacted by heating, while a reaction temperature thereof was controlled to be stable between 65 °C to 70 °C for 18 hours, and ammonium persulfate (0.22 g, 0.95 mmol) was secondarily added thereto and then, heated to 80 °C and reacted again for 4 hours.

After cooling the reaction solution to room temperature, the reaction solution was treated with a 25% ammonia solution to adjusted pH to 7 to 8. The reaction solution was taken by about 10 mL to measure a non-volatile component (NV), which was 9.8% (theoretical value: 10%). In addition, in the obtained poly(acrylic acid-co-acrylonitrile-co-2-acrylamido-2-methylpropanesulfonic acid) lithium salt, a structural unit derived from acrylic acid, a structural unit derived from acrylonitrile, and a structural unit derived from 2-acrylamido-2-methylpropanesulfonic acid had a molar ratio of 45:50:5.

### Comparative Synthesis Example 3: Poly(acrylic acid-co-acrylamide-co-2-acrylamido-2-methylpropanesulfonic acid) lithium salt (0/95/5)

After adding distilled water (6,361 g), acrylamide (675.3 g, 9.5 mol), potassium persulfate (2.7 g, 0.01 mol), 2-acrylamido-2-methylpropanesulfonic acid (103.6 g, 0.5 mol), and a 5N aqueous lithium hydroxide solution (1.05 equivalents based on a total amount of the 2-acrylamido-2-methylpropanesulfonic acid) to a 3 L 4-necked separable flask equipped with a stirrer, a thermometer, and a cooling tube, an internal pressure of the flask was three times repeatedly reduced to 10 mmHg with a diaphragm pump and returned to a normal pressure with nitrogen.

The reaction solution was reacted by heating, while a reaction temperature thereof was controlled to be stable between 65 °C to 70 °C for 12 hours. After cooling the reaction solution to room temperature, the reaction was treated with a 25% ammonia solution to adjust pH to 7 to 8.

The reaction solution (reaction product) was taken by about 10 mL to measure a non-volatile component, which was 9.5% (theoretical value: 10%). In addition, in the obtained poly(acrylic acid-co-acrylamide-co-2-acrylamido-2-methylpropanesulfonic acid) lithium salt, a structural unit derived from acrylic acid, a structural unit derived from acrylamide, and a structural unit derived from 2-acrylamido-2-methylpropanesulfonic acid had a molar ratio of 0:95:5. In fact, it can be said to be poly(acrylamide-co-2-acrylamido-2-methylpropanesulfonic acid) lithium salt.

### Examples and Comparative Examples: Manufacture of separator for rechargeable lithium battery and rechargeable lithium battery cell

### Example 1

A binder aqueous solution including the binder of Synthesis Example 1 (10 wt% in distilled water) and boehmite (amorphous, D₅₀ = 0.3 µm) in a weight ratio of 1:20 were dispersed in water and then, milled at 25 °C for 30 minutes by using a bead mill to prepare inorganic dispersion. Subsequently, water was added thereto to have a total solid content of 20 wt%, preparing a composition for a coating layer. The prepared composition for a coating layer was die-coated to be 1 µm thick on the single surface pf a 5.5 µm-thick polyethylene porous substrate (air permeability: 110 sec/100 cc, puncture strength: 360 kgf, CZMZ Co.) and then, dried at 70 °C for 10 minutes to manufacture a separator.

Positive electrode active material slurry was prepared by mixing LiNi_{0.75}Mn_{0.23}Al_{0.02}O₂ as a positive electrode active material, polyvinylidene fluoride as a binder, and acetylene black as a conductive material in a weight ratio of 96:3:1 and dispersing the mixture in N-methyl pyrrolidone.

The positive electrode active material slurry was coated on a 15 µm-thick Al foil, dried at 100 °C, and pressed to manufacture a positive electrode.

Negative electrode active material slurry was prepared by mixing artificial graphite and an Si-C composite in a weight ratio of 93:7 to prepare a negative electrode active material, mixing the negative electrode active material, a styrene-butadiene rubber binder, and carboxy methyl cellulose in a ratio of 98:1:1, and dispersing the mixture in distilled water.

The Si-C composite had a core containing artificial graphite and silicon particles and coal-based pitch coated on the core.

The negative electrode active material slurry was coated on a 10 µm-thick Cu foil, dried at 100 °C, and pressed to manufacture a negative electrode.

The positive and negative electrodes were assembled with the separator to manufacture an electrode assembly, and an electrolyte solution was injected thereinto to manufacture a rechargeable lithium battery cell. Herein, the electrolyte solution was prepared by mixing ethylene carbonate (EC) and ethylmethyl carbonate (EMC) in a volume ratio of 3:7 and dissolving 1 M LiPF₆ in the mixed non-aqueous organic solvent.

### Example 2

A separator for a rechargeable lithium battery and a rechargeable lithium battery cell were manufactured in the same manner as in Example 1 with a difference that the binder of Synthesis Example 2 was used instead of the binder of Synthesis Example 1.

### Example 3

A separator for a rechargeable lithium battery and a rechargeable lithium battery cell were manufactured in the same manner as in Example 1 with a difference that the binder of Synthesis Example 3 was used instead of the binder of Synthesis Example 1.

### Example 4

A separator for a rechargeable lithium battery and a rechargeable lithium battery cell were manufactured in the same manner as in Example 1 with a difference that the binder of Synthesis Example 4 was used instead of the binder of Synthesis Example 1.

### Example 5

A separator for a rechargeable lithium battery and a rechargeable lithium battery cell were manufactured in the same manner as in Example 1 with a difference that the binder of Synthesis Example 5 was used instead of the binder of Synthesis Example 1.

### Comparative Example 1

A separator for a rechargeable lithium battery and a rechargeable lithium battery cell were manufactured in the same manner as in Example 1 with a difference that the binder of Comparative Synthesis Example 1 was used instead of the binder of Synthesis Example 1.

### Comparative Example 2

A separator for a rechargeable lithium battery and a rechargeable lithium battery cell were manufactured in the same manner as in Example 1 with a difference that the binder of Comparative Synthesis Example 2 was used instead of the binder of Synthesis Example 1.

### Comparative Example 3

A separator for a rechargeable lithium battery and a rechargeable lithium battery cell were manufactured in the same manner as in Example 1 with a difference that the binder of Comparative Synthesis Example 3 was used instead of the binder of Synthesis Example 1.

Each thickness and composition of the coating layers according to the examples and the comparative examples are provided in Table 1.

**[Table 1]**

| | Thickness of coating layer (µm) | Composition of coating layer | | |
|---|---|---|---|---|
| | | Type of binder | Inorganic particles D₅₀(µm) | Weight ratio of binder:inorganic particles |
| Example 1 | 1 (single surface) | Synthesis Example 1 | 0.3 | 1:20 |
| Example 2 | 1 (single surface) | Synthesis Example 2 | 0.3 | 1:20 |
| Example 3 | 1 (single surface) | Synthesis Example 3 | 0.3 | 1:20 |
| Example 4 | 1 (single surface) | Synthesis Example 4 | 0.3 | 1:20 |
| Example 5 | 1 (single surface) | Synthesis Example 5 | 0.3 | 1:20 |
| Comparative Example 1 | 1 (single surface) | Comparative Synthesis Example 1 | 0.3 | 1:20 |
| Comparative Example 2 | 1 (single surface) | Comparative Synthesis Example 2 | 0.3 | 1:20 |
| Comparative Example 3 | 1 (single surface) | Comparative Synthesis Example 3 | 0.3 | 1:20 |

### Evaluation 1: Evaluation of Separator

Each of the separators according to Examples 1 to 5 and Comparative Examples 1 to 3 was evaluated according to the following method, and the results are shown in Table 2.

### (1) Heat Shrinkage Rate

After cutting each of the separators into a size of 10 cm (machine direction, MD) x 10 cm (transverse direction, TD) to prepare a sample and drawing a quadrangle with a size of 8 cm x 8 cm thereon, the sample was inserted between papers or alumina powder and then, allowed to stand in an oven at 150 °C for 60 minutes.

Subsequently, the sample was taken out and compared with a pre-drawn quadrangle with a size of 8 cm (machine direction, MD) x 8 cm (transverse direction, TD) to calculate each heat shrinkage rate in the machine direction (MD) and the transverse direction (TD) according to Equation 1. Heat shrinkage rate = [(Initial length - Length after heat shrinkage treatment)/(Initial length)]

### (2) Resistance When Impregnated With Electrolyte Solution

Each of the separators was cut into a size of 10 cm x 10 cm to prepare a sample, and the sample was impregnated in the electrolyte solution of Example 1 to measure resistance at 25 °C in an alternating current method.

### (3) Air Permeability

After cutting a separator to have a cross-section of 1 inch² to prepare a sample, time (seconds) that it took for 100 cc of air to pass through the sample was measured by a densometer according to an ASTM D 726-94 test method.

### (4) Adhesive Strength

After contacting the coating layer of the separator with the negative electrode active material layer of Example 1, the separator was bonded to the negative electrode in a chamber at 60 °C by using a laminator. Accordingly, the bonded laminate of the separator and the negative electrode was cut into a predetermined size (a width: 25 mm, a length: 50 mm) to prepare a sample, a force required for peeling in a direction of 180 ° was measured by using a tension meter (TA-XT, Stable Micro Systems).

**[Table 2]**

| | 150 °C Heat shrinkage rate (%) | | Resistance when impregnated with electrolyte solution (Ω) | Air permeability (sec/100cc) | Adhesive strength (N) |
|---|---|---|---|---|---|
| | MD | TD | | | |
| Example 1 | 3 | 3 | 0.4 | 125 | 2.0 |
| Example 2 | 4 | 3 | 0.45 | 124 | 2.1 |
| Example 3 | 4 | 4 | 0.5 | 125 | 2.2 |
| Example 4 | 3 | 3 | 0.42 | 123 | 2.1 |
| Example 5 | 4 | 3 | 0.47 | 124 | 2.1 |
| Comparative Example 1 | 4 | 4 | 0.4 | 124 | 1.0 |
| Comparative Example 2 | 5 | 4 | 0.7 | 125 | 2.0 |
| Comparative Example 3 | 4 | 4 | 0.7 | 123 | 2.3 |

Referring to Table 2, each of the separators of Examples 1 to 5 exhibited enhanced adhesive strength, compared with the separator of Comparative Example 1.

In addition, the separators of Examples 1 to 5, compared with the separators of Comparative Examples 2 and 3, exhibited reduced resistance when impregnated with an electrolyte solution.

### Evaluation 2: Evaluation of Rechargeable Lithium Battery Cell

### (1) Room-temperature Charge/discharge Cycle Evaluation

The rechargeable lithium battery cells of Examples 1 to 5 and Comparative Examples 1 to 3 were respectively charged and discharged to evaluate cycle characteristics, and the results are shown in Table 3.

After 200 cycles charging and discharging the cells at 25 °C under the conditions of 0.33 C charge (CC/CV, 4.45 V, 0.025 C Cut-off) /1.0 C discharge (CC, 2.5 V Cut-off), capacity retention rate and direct current internal resistance (DC-IR) changes were measured.

The capacity retention rate was calculated according to Equation 2, and a DC-IR change rate was calculated according to Equation 3 based on a voltage changed while discharging by applying a current of SOC 50 C for 30 seconds. Capacity retention rate = (discharge capacity after 200 cycles/discharge capacity after 1 cycle) * 100(%) DC internal resistance change rate = {(DC-IR after 200 cycles)-(DC-IR after 1 cycle)/(DC-IR after 1 cycle)} * 100(%)

**[Table 3]**

| | Capacity retention rate @25 °C, 200 cyc. (%) | Initial resistance @25 °C (Ω) | DC-IR after 200cy @25 °C (Ω) | DC-IR change rate after 200cyc. @25 °C (%) |
|---|---|---|---|---|
| Example 1 | 88 | 2.30 | 4.60 | 200 |
| Example 2 | 85 | 2.59 | 5.30 | 205 |
| Example 3 | 83 | 2.88 | 6.04 | 210 |
| Example 4 | 89 | 2.42 | 4.85 | 201 |
| Example 5 | 84 | 2.70 | 5.59 | 207 |
| Comparative Example 1 | 87 | 2.30 | 7.15 | 311 |
| Comparative Example 2 | 78 | 4.03 | 8.65 | 215 |
| Comparative Example 3 | 79 | 4.03 | 8.65 | 215 |

Referring to Table 3, the rechargeable lithium battery cells of Examples 1 to 5, compared with rechargeable lithium battery cell of Comparative Example 1, exhibited a reduced DC-IR change rate at room temperature. In addition, the rechargeable lithium battery cells of Examples 1 to 5, compared with the separators of Comparative Examples 2 and 3, exhibited reduced initial resistance as well as improved capacity retention rate at room temperature.

### (2) Evaluation of High-temperature (45 °C) Charging and Discharging Cycle Characteristics

The rechargeable lithium battery cells of Examples 1 to 5 and Comparative Examples 1 to 3 were evaluated with respect to cycle characteristics after charging and discharging under the following conditions, and the results are shown in Table 4.

After 200 cycles charging and discharging the cells at 45 °C under the conditions of 0.33 C charge (CC/CV, 4.45 V, 0.025C Cut-off) /1.0 C discharge (CC, 2.5V Cut-off), capacity retention rate and direct current internal resistance (DC-IR) changes were measured.

The capacity retention rate and a direct current internal resistance (DC-IR) change rate were respectively calculated according to Equations 2 and 3.

**[Table 4]**

| | Capacity retention rate @45 °C, 200 cyc. (%) | Initial resistance @45 °C (Ω) | DC-IR after 200 cyc. @45 °C (Ω) | DC-IR change rate after 200 cyc. @45 °C (%) |
|---|---|---|---|---|
| Example 1 | 73 | 2.09 | 6.38 | 305 |
| Example 2 | 71 | 2.35 | 7.29 | 310 |
| Example 3 | 69 | 2.61 | 8.23 | 315 |
| Example 4 | 74 | 2.20 | 6.72 | 306 |
| Example 5 | 70 | 2.46 | 7.67 | 312 |
| Comparative Example 1 | 73 | 2.09 | 10.2 | 488 |
| Comparative Example 2 | 65 | 3.66 | 11.71 | 320 |
| Comparative Example 3 | 66 | 3.66 | 11.71 | 320 |

Referring to Table 4, the rechargeable lithium battery cells of Examples 1 to 5, compared with the rechargeable lithium battery cell of Comparative Example 1, exhibited a reduced direct current internal resistance (DC-IR) change rate at a high temperature. In addition, the rechargeable lithium battery cells of Examples 1 to 5, compared with the separators of Comparative Examples 2 and 3, exhibited reduced initial resistance and improved capacity retention rate at a high temperature.

### Summary

In summary, the separators of the examples included a binder including specific structure units and had high heat resistance and low electrical resistance. When such a binder is applied to a coating layer of a separator, a rechargeable lithium battery with desired, advantageous or improved cycle-life characteristics at room temperature and/or a high temperature may be realized.

### <Description of symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A binder for a rechargeable lithium battery (100), the binder being a copolymer comprising
a first structural unit derived from at least one of (meth)acrylic acid, (meth)acrylate, and a salt thereof;
a second structural unit derived from hydroxyalkyl (meth)acrylate; and
a third structural unit derived from at least one of (meth)acrylamidosulfonic acid and a salt thereof.

2. The binder as claimed in claim 1, wherein based on 100 mol% of the binder, at least one of:
the first structural unit is included in an amount of 20 mol% to 75 mol%,
the second structural unit is included in an amount of 1 mol% to 20 mol%, and
the third structural unit is included in an amount of 20 mol% to 75 mol%,
wherein the total amount of the first structural unit, the second structural unit, and the third structural unit add up to 100 mol%.

3. The binder as claimed in claim 1 or 2, wherein at least one of:
the first structural unit is represented by any one of Chemical Formulas 1 to 3,
the second structural unit is represented by Chemical Formula 4, and
the third structural unit is represented by any one of Chemical Formulas 5 to 7: 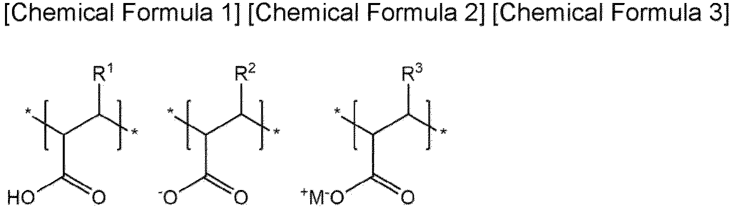 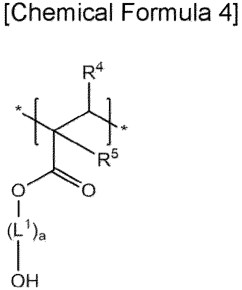 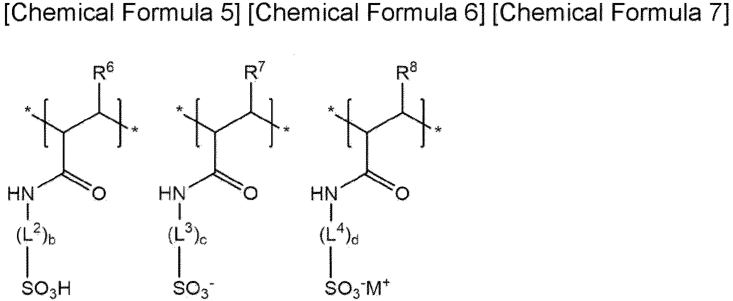 wherein in Chemical Formulas 1 to 7,
R¹ to R⁸ each independently include hydrogen or a C1 to C10 alkyl group,
L¹ to L⁴ each independently include at least one of a substituted or unsubstituted C1 to C10 alkylene group, a substituted or unsubstituted C3 to C20 cycloalkylene group, a substituted or unsubstituted C6 to C20 arylene group, and a substituted or unsubstituted C3 to C20 heterocyclic group,
a, b, c, and d are integers each independently ranging from 0 to 2, and
M includes an alkali metal,
wherein "substituted" refers to a replacement of at least one hydrogen atom by a substituent selected from the group consisting of a halogen atom, a hydroxy group, a C1 to C20 alkoxy group, a nitro group, a cyano group, an amino group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

4. The binder as claimed in any one of the preceding claims, wherein the binder has a weight average molecular weight (Mw) of 100,000 g/mol to 1,000,000 g/mol measured using gel permeation chromatography (GPC).

5. A separator (30) for a rechargeable lithium battery (100), the separator comprising:
a porous substrate; and
a coating layer on at least one surface of the porous substrate and including a binder as claimed in claim 1 and inorganic particles.

6. The separator (30) as claimed in claim 5, wherein the inorganic particles include at least one of Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a combination thereof.

7. The separator (30) as claimed in claim 5 or 6, wherein an average particle size (D₅₀) by volume of the inorganic particles is in a range of 0.2 µm to 1 µm measured using laser diffraction (LD).

8. The separator (30) as claimed in any one of claims 5 to 7, wherein a weight ratio of the binder and the inorganic particles is in a range of 1:5 to 1:40.

9. The separator (30) as claimed in any one of claims 5 to 8, wherein a thickness of the coating layer is in a range of 0.2 µm to 5 µm.

10. A rechargeable lithium battery (100), comprising:
a positive electrode (10), a negative electrode (20), and the separator (30) for a rechargeable lithium battery as claimed in claim 5 between the positive electrode (10) and the negative electrode (20).
